# FASCICULE DE BREVET EUROPEEN

(11) **EP 4 132 760 B1**
(45) Date de publication et mention de la délivrance du brevet: **20.03.2024**
(21) Numéro de dépôt: 21732365.8
(22) Date de dépôt: 24.03.2021
(51) Int. Cl.: B29C 33/20, B29C 70/46, F01D 25/24

(54) **MOULE POUR LA FABRICATION D'UN CARTER DE SOUFFLANTE DE TURBOMACHINE EN MATERIAU COMPOSITE**
FORM ZUR HERSTELLUNG EINES TURBINENMOTORGEBLÄSEGEHÄUSES AUS EINEM VERBUNDSTOFFMATERIAL
MOLD FOR MANUFACTURING A TURBINE ENGINE FAN CASING FROM A COMPOSITE MATERIAL

(30) Priorité: 07.04.2020 FR 2003460
(43) Date de publication de la demande: 15.02.2023
(73) Titulaire: SAFRAN AIRCRAFT ENGINES, 75015 Paris (FR)
(72) Inventeur: FABRE, Hubert, Jean, Marie, 77550 MOISSY-CRAMAYEL (FR); JAUSSAUD, Raoul, 77550 MOISSY-CRAMAYEL (FR)
(74) Mandataire: Cabinet Beau de Loménie
(86) Numéro de dépôt international: PCT/FR2021/050506
(87) Numéro de publication internationale: WO 2021/205091

(56) Documents cités:
- WO-A1-2017/089680
- WO-A1-2018/234687
- FR-A1- 3 059 044

## Description

### Domaine Technique

La présente invention se rapporte au domaine général de la fabrication des carters de turbomachine, et plus particulièrement des carters de rétention pour soufflante de turbine à gaz pour moteur aéronautique.

### Technique antérieure

Dans une turbomachine aéronautique un carter de soufflante remplit plusieurs fonctions. Le carter de soufflante définit la veine d'entrée d'air de la turbomachine, supporte un matériau abradable en regard du sommet des aubes de la soufflante, supporte une éventuelle structure d'absorption d'ondes sonores pour le traitement acoustique en entrée de la turbomachine, et incorpore ou supporte un bouclier de rétention.

Le bouclier de rétention forme un piège retenant les débris, tels que les objets ingérés ou des fragments d'aubes endommagées, projetés sous l'effet de la force centrifuge, afin d'éviter que ces débris traversent le carter et atteignent d'autres parties de l'aéronef.

Il est connu de réaliser le carter de soufflante en matériau composite, et plus particulièrement en matériau composite à matrice organique. Pour ce faire, une texture fibreuse est enroulée autour d'un mandrin afin de former une préforme fibreuse qui possède la forme du carter à fabriquer. La préforme fibreuse est ensuite densifiée par une matrice.

Afin de réaliser la densification de la préforme fibreuse par la matrice, ladite préforme fibreuse est enroulée autour d'un mandrin d'imprégnation, puis des secteurs angulaires de contre-moule sont disposés autour du mandrin d'imprégnation afin de former le moule d'injection. Un matériau précurseur de la matrice est ensuite injecté dans le moule afin de densifier la préforme fibreuse avec ledit matériau précurseur de la matrice. Une fois la préforme fibreuse densifiée, le matériau précurseur est polymérisé.

On connait par exemple le document WO2017/089680 qui décrit un moule d'injection pour la fabrication d'un carter de soufflante en matériau composite qui comprend une pluralité de secteurs angulaires disposés autour d'un mandrin d'imprégnation.

Dans le document WO2017/089680, l'étanchéité entre les différents secteurs angulaires est assurée par des pièces en forme de T qui sont fixées par des boulonnages entre chaque secteur angulaire et qui compriment chacune un joint plat chevauchant deux secteurs angulaires adjacents.

Une telle solution possède l'inconvénient de demander un temps de manutention très important, notamment pour visser ou dévisser les boulonnages fixant les pièces en forme de T aux secteurs angulaires.

De plus, un tel moule d'injection peut rencontrer un problème de rigidité, et notamment de rigidité au niveau de la liaison entre les secteurs angulaires.

### Exposé de l'invention

La présente invention a donc pour but principal de pallier un tel inconvénient en proposant, selon un premier aspect de l'invention, un moule pour la fabrication d'un carter de soufflante de turbomachine en matériau composite, et plus précisément en matériau composite à matrice organique, comprenant :
- un mandrin d'axe principal autour duquel une préforme fibreuse de carter de soufflante est destinée à être enroulée ;
- une pluralité de secteurs angulaires de contre-moule assemblés sur le contour externe du mandrin qui sont destinés à fermer le moule et à compacter la préforme fibreuse enroulée sur le mandrin ;
caractérisé en ce qu'un joint plat avec un axe principal d'élongation dirigé selon l'axe principal est disposé entre chaque secteur angulaire, ledit joint plat étant comprimé entre deux secteurs angulaires adjacents, un premier secteur angulaire comprenant une portion d'étanchéité passant sous une face inférieure du joint plat tandis qu'un deuxième secteur angulaire comprenant une portion d'étanchéité passant par-dessus une face supérieure du joint plat.

Selon une caractéristique possible, le joint plat est incliné autour de son axe principal d'élongation de sorte que la face supérieure du joint plat est dirigée vers le deuxième secteur angulaire.

Selon une caractéristique possible, la face supérieure du joint plat est parallèle à la portion d'étanchéité du deuxième secteur angulaire.

Selon une caractéristique possible, le mandrin comprend une bride amont et une bride aval, un premier joint annulaire étant disposé autour de la bride amont, et un deuxième joint annulaire étant disposé autour de la bride aval, la face inférieure du joint plat chevauchant le premier joint annulaire et le deuxième joint annulaire.

Selon une caractéristique possible, des protubérances faisant saillie radialement vers l'extérieur sont angulairement réparties sur la bride amont et la bride aval, les protubérances de la bride amont étant axialement alignées avec les protubérances de la bride aval, les protubérances comprenant deux faces planes et un sommet à la jonction entre les deux faces planes, la portion d'étanchéité du premier secteur angulaire formant une surface plane sur laquelle le joint plat est disposé avec une face plane des protubérances de la bride amont et une face plane des protubérances de la bride aval.

Selon une caractéristique possible, les protubérances sont en forme de créneau, ou bien les protubérances sont en forme de dent.

Selon une caractéristique possible, la surface plane formée par la portion d'étanchéité du premier secteur, la face plane des protubérances de la bride amont et la face plane des protubérances de la bride aval est perpendiculaire à la direction de fixation du deuxième secteur angulaire sur le mandrin.

Selon une caractéristique possible, les deux faces planes des protubérances présentent une pente différente l'une par rapport à l'autre.

Selon une caractéristique possible, le premier secteur angulaire est fixé directement au deuxième secteur angulaire.

Selon une caractéristique possible, le joint plat est en élastomère.

Selon un deuxième aspect, l'invention concerne un procédé de fabrication d'un carter de soufflante de turbomachine en matériau composite avec le moule selon l'une quelconque des caractéristiques précédentes, le procédé comprenant les étapes suivantes :
- enrouler une préforme fibreuse du carter de soufflante autour du mandrin ;
- assembler la pluralité de secteurs angulaires de contre-moule sur le contour externe du mandrin en disposant un premier secteur angulaire sur le contour externe du mandrin, le joint plat étant ensuite disposé sur la portion d'étanchéité du premier secteur angulaire, un deuxième secteur angulaire étant ensuite disposé sur le mandrin en plaçant la portion d'étanchéité du deuxième secteur angulaire par-dessus le joint plat ;
- densifier la préforme fibreuse par injection d'un matériau précurseur d'une matrice du matériau composite dans le moule ;
- polymériser le matériau précurseur pour obtenir la matrice du matériau composite ;
- retirer la pluralité de secteurs angulaires ;
- démouler le carter de soufflante.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif.
[Fig. 1] la figure 1 représente schématiquement un moule pour la fabrication d'un carter de soufflante en matériau composite selon un premier mode de réalisation.
[Fig. 2] La figure 2 représente schématique le mandrin du moule de la figure 1 sans les secteurs angulaires.
[Fig. 3] La figure 3 représente schématiquement le positionnement d'un premier secteur angulaire sur le mandrin de la figure 2, ainsi que la coopération du premier secteur angulaire avec un joint plat et un deuxième secteur angulaire.
[Fig. 4] La figure 4 représente schématiquement en vue de coupe la coopération entre le premier secteur angulaire, le deuxième secteur angulaire, et le joint plat écrasé entre les deux secteurs angulaires.
[Fig. 5] La figure 5 représente schématiquement un moule selon un deuxième mode de réalisation.
[Fig. 6] La figure 6 représente schématiquement les différentes étapes d'un procédé de fabrication d'un carter de soufflante en matériau composite.
[Fig. 7] La figure 7 représente schématique la direction d'installation d'un premier secteur angulaire sur deux deuxièmes secteurs angulaires adjacents.

### Description des modes de réalisation

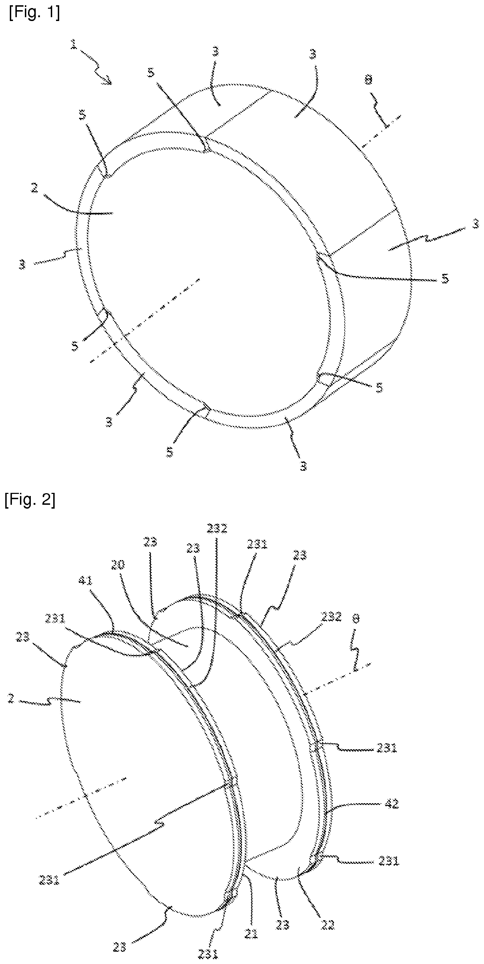

Comme illustrée sur les figures 1 à 4, un moule 1 pour la fabrication d'un carter de soufflante de turbomachine en matériau composite comprend un mandrin 2 autour duquel une préforme fibreuse du carter de soufflante est enroulée. Le mandrin 2 possède une forme cylindrique d'axe principal θ.

Le moule 1 est destiné à être utilisé pour l'imprégnation par un procédé du type RTM (« Resin Transfer Molding ») de la préforme fibreuse.

La préforme fibreuse peut être réalisée par tissage bidimensionnel de fibres (tissage 2D), ou bien de préférence par tissage tridimensionnel de fibres (tissage 3D).

Par « tissage tridimensionnel » ou « tissage 3D » ou encore « tissage multicouche », on entend ici un mode de tissage par lequel certains au moins des fils de trame lient des fils de chaîne sur plusieurs couches de chaîne, ou inversement, suivant un tissage correspondant à une armure de tissage, ladite armure de tissage pouvant être notamment choisie parmi une des armures suivantes : interlock, multi-toile, multi-satin et multi-sergé.

Par « tissage bidimensionnel » ou « tissage 2D » on entend ici un mode de tissage classique par lequel chaque fil de chaîne passe d'un côté à l'autre de fils d'une seule couche de trame.

La préforme fibreuse peut être réalisée par des fibres de carbone, des fibres de verre, des fibres d'aramide, ou encore des fibres de céramique.

La paroi externe 20 du mandrin 2 autour de laquelle la préforme fibreuse est enroulée possède un profil qui correspond au profil du carter de soufflante à fabriquer.

Le moule 1 comprend également une pluralité de secteurs angulaires 3 de contre-moule qui sont assemblés de manière amovibles sur le contour externe du mandrin

2. Une fois assemblés sur le contour externe du mandrin 2, les secteurs angulaires 3 ferment le moule 1 et compriment la préforme fibreuse.

La compression de la préforme fibreuse par les secteurs angulaires 3 d'une part permet de forcer la préforme fibreuse à épouser le profil de la surface externe 20 du mandrin 2, et d'autre part permet d'obtenir le taux volumique de fibres et l'épaisseur souhaités dans le carter de soufflante.

Afin de fixer les secteurs angulaires 3 au mandrin 2, le mandrin 2 comprend une bride amont 21 située à une extrémité avant du mandrin 2 et une bride aval 22 située à une extrémité arrière du mandrin 2, et chaque secteur angulaire 3 comprend d'une part une bride avant qui est configurée pour coopérer avec la bride amont 21, et d'autre part une bride arrière qui est configurée pour coopérer avec la bride aval 22.

Dans la variante illustrée sur les figures 1 à 4, la bride avant et la bride arrière des secteurs angulaires 3 sont respectivement fixées à la bride amont 21 et la bride aval 22 par des boulonnages qui sont disposés dans des perçages formés dans lesdites bride avant et bride arrière des secteurs angulaires 3, et la bride amont 21 et la bride aval 22 du mandrin 2.

De plus, les secteurs angulaires 3 sont fixés entre eux, chaque secteur angulaire 3 étant directement fixé aux deux secteurs angulaires 3 qui lui sont adjacents. Le fait que les secteurs angulaires 3 soient fixés entre eux permet d'augmenter la rigidité du moule 1. En outre, le fait que les secteurs angulaires soient fixés directement entre eux permet de simplifier le moule 1 en se passant des pièces en forme de T utilisées dans l'état de la technique. Pour ce faire, chaque secteur angulaire 3 peut comprendre une bride à chacune de ses extrémités latérales, de sorte que les secteurs angulaires 3 adjacents sont fixés par leurs brides à leurs extrémités latérales. La fixation des brides des extrémités latérales de secteurs angulaires 3 adjacents peut être réalisée par des boulonnages.

Comme visible sur la figure 2, un premier joint annulaire 41 est disposé autour de la bride amont 21 du mandrin 2, et un deuxième joint annulaire 42 est disposé autour de la bride aval 22 du mandrin 2. Le premier joint annulaire 41 et le deuxième joint annulaire 42 sont disposés chacun dans une gorge formée dans la bride amont 21 et la bride aval 22 du mandrin 2. Le premier joint annulaire 41 et le deuxième joint annulaire 42 sont écrasés par les brides avants 31 et les brides arrières 32 des secteurs 3, permettant ainsi d'améliorer l'étanchéité du moule 1.

En outre, afin d'améliorer l'étanchéité du moule 1, un joint plat 5 est disposé entre chaque secteur angulaire 3. Le moule 1 comprend ainsi une pluralité de joints plats 5 qui chacun sont situés entre deux secteurs angulaires 3 adjacents.

Les joints plats 5 sont formés par des bandelettes en matériau imperméable, comme par exemple un élastomère.

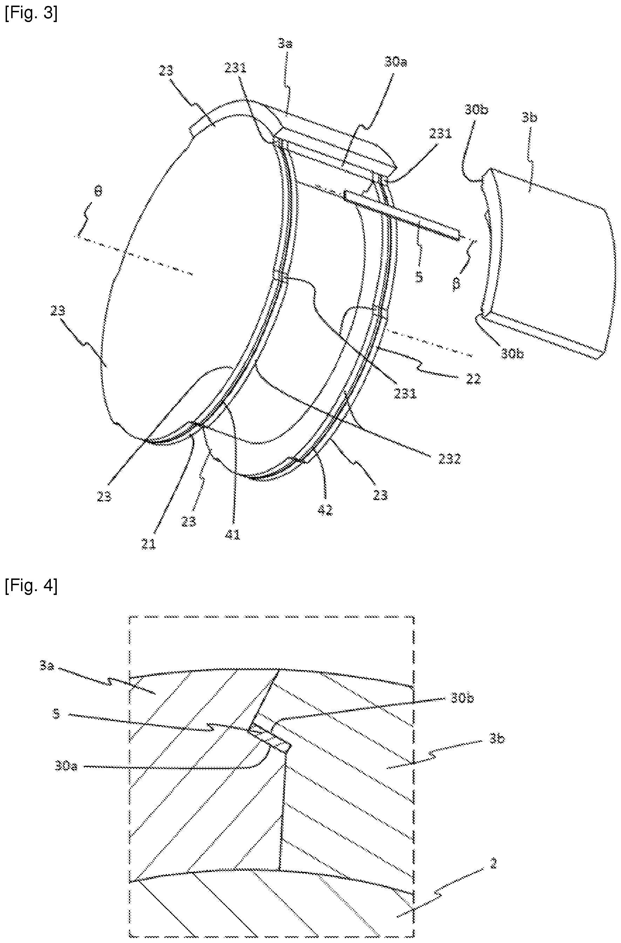

La disposition des joints plats 5 est illustrée sur la figure 3. A des fins de simplification, un unique joint plat 5 et seul un premier secteur angulaire 3a et un deuxième secteur angulaire 3b sont représentés sur la figure 3, toutefois le moule 1 comprend une pluralité de premiers secteurs angulaires 3a, une pluralité de deuxième secteur angulaire 3b, et une pluralité de joints plats 5.

Comme visible sur la figure 3, le joint plat 5 est aligné avec l'axe principal θ du mandrin 2, autrement dit le joint plat 5 comprend un axe principal d'élongation β qui est parallèle à l'axe principal θ.

Le joint plat 5 est écrasé entre d'une part une portion d'étanchéité 30a du premier secteur angulaire 3a et d'autre part une portion d'étanchéité 30b du deuxième secteur angulaire 3b. Pour ce faire, la portion d'étanchéité 30a du premier secteur angulaire 3a forme une surface plane qui passe sous une face inférieure du joint plat et sur laquelle le joint plat 5 est déposé, et la portion d'étanchéité 30b du deuxième secteur angulaire 3b forme une surface plane qui est complémentaire à la portion d'étanchéité 30a du premier secteur angulaire 3a et qui passe par-dessus une face supérieure du joint plat de sorte à écraser le joint plat 5 contre la portion d'étanchéité 30a du premier secteur angulaire 3a. La forme de la portion d'étanchéité 30a du premier secteur angulaire 3a et la forme de la portion d'étanchéité 30b du deuxième secteur angulaire 3b sont adaptées pour prendre en compte l'épaisseur du joint plat 5, les deux portion d'étanchéités 30a et 30b n'étant pas en contact l'une avec l'autre pour laisser une place suffisante pour le joint plat 5.

Le joint plat 5 peut être incliné autour de son axe principal d'élongation β de sorte que la face supérieure du joint plat 5 est dirigée vers le deuxième secteur angulaire 30b, et que la face inférieure du joint plat 5 est dirigée vers le premier secteur angulaire 3a. Dans cette variante, la portion d'étanchéité 30a et la portion d'étanchéité 30b forment chacune une surface plane inclinée. La face supérieure du joint plat 5 est parallèle à la portion d'étanchéité 30b du deuxième secteur angulaire 3b.

En outre, le joint plat 5 chevauche le premier joint annulaire 41 et chevauche le deuxième joint annulaire 42, permettant ainsi d'assurer une continuité de l'étanchéité au niveau de la liaison entre le premier secteur angulaire 3a et le deuxième secteur angulaire 3b.

Comme visible notamment sur la figure 3, la bride amont 21 et la bride aval 22 comprennent une pluralité de protubérances 23 qui font saillies radialement vers l'extérieur. Les protubérances sont angulairement réparties le long de la bride amont 21 et de la bride aval 22, les protubérances 23 étant alignées selon l'axe principal θ. Les protubérances 23 comprennent chacune deux faces planes 231 qui sont séparées par un sommet 232. Le premier joint annulaire 41 et le deuxième joint annulaire 42 s'étendent le long des protubérances 23.

Le joint plat 5 est mis en place de manière à recouvrir deux faces planes 231, une première face plane 231 située sur la bride amont 21 et une deuxième face plane 231 située sur la bride aval 22 et qui est axialement alignée selon θ avec la première face plane 231. La zone d'étanchéité 30a du premier secteur 3a est située entre la première face plane 231 et la deuxième face plane 231 lorsque le premier secteur 3a est monté sur le mandrin 2 afin de former une surface plane avec lesdites faces planes 231 sur laquelle le joint plat 5 est installé.

Le premier secteur angulaire 3a possède une portion d'étanchéité 30a à chacune de ses deux extrémités qui est configurée pour recevoir un joint plat 5, et le deuxième secteur angulaire 3b possède une portion d'étanchéité 30b à chacune de ses deux extrémités qui est configurée pour écraser un joint plat 5 contre la portion d'étanchéité 30a du premier secteur angulaire 3a.

Un premier secteur angulaire 3a est entouré par deux deuxièmes secteurs angulaires 3b, et un deuxième secteur angulaire 3b est entouré par deux premiers secteurs angulaires 3a.

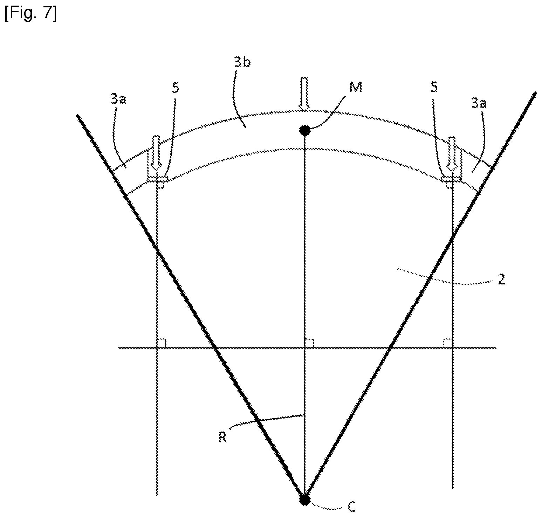

De manière préférentielle, afin de limiter le risque de cisaillement du joint plat 5, la surface plane qui est formée par la zone d'étanchéité 30a du premier secteur 3a, la première face plane 231 et la deuxième face plane 231, est perpendiculaire à la direction de fixation du deuxième secteur angulaire 3b sur le mandrin 2. Comme cela est illustré sur la figure 7, le deuxième secteur 3b étant installé verticalement à l'aide d'un pont porteur, ledit deuxième secteur 3b est installé sur les premiers secteurs 3a adjacents avec une direction d'installation qui suit le rayon R formé entre le centre C du mandrin 2 et un point M situé au milieu du deuxième secteur 3b. Comme visible sur la figure 7, le joint plat 5 est perpendiculaire au rayon R, et ce qui est donc également le cas pour la surface plane qui est formée par la zone d'étanchéité 30a des premiers secteurs 3a, la première face plane 231 et la deuxième face plane 231.

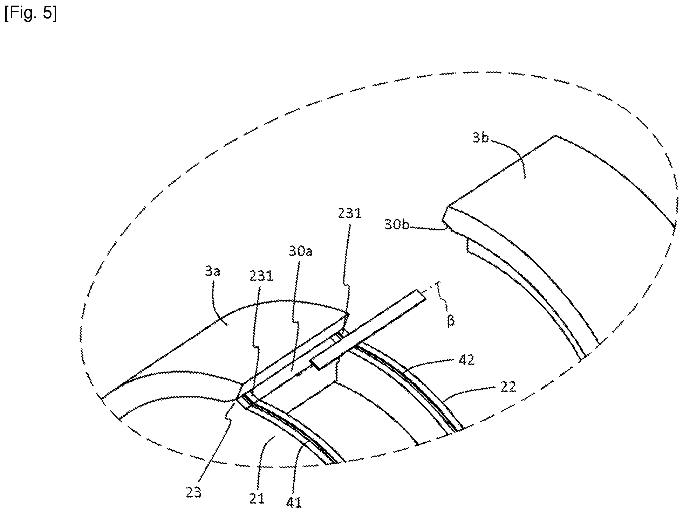

Dans le premier mode de réalisation illustré sur les figures 1 à 3, les protubérances 23 possèdent une forme de créneau. Toutefois d'autres formes peuvent être possibles, et par exemple les protubérances 23 peuvent avoir une forme de dent comme cela est visible sur la figure 5 qui illustre un deuxième mode de réalisation. Les protubérances 23 en créneau possèdent un sommet 232 surfacique, tandis que les protubérances 23 en forme de dent possèdent un sommet 232 linéique.

Dans le premier mode de réalisation dans lequel les protubérances 23 sont en forme créneau, le premier secteur angulaire 3a et les protubérances 23 sont de même longueur, de sorte que les premiers secteurs angulaires 3a sont situés sur protubérances 23 et les deuxièmes secteurs angulaires 3b sont situés entre les protubérances 23.

Dans le deuxième mode de réalisation dans lequel les protubérances 23 sont en forme de dent, les secteurs 3 sont disposés entre deux protubérances 23.

Selon une variante possible, les deux faces planes 231 des protubérances 23 possèdent une pente différente. Notamment, la face plane 231 sur laquelle repose le joint plat 5 peut posséder une pente plus importante que l'autre face plane 231. Ainsi, la face plane 231 sur laquelle repose le joint plat 5 possède une pente qui est déterminée en fonction de la direction de fermeture du premier secteur angulaire 3a, et l'autre face plane 231 peut avoir une pente quelconque.

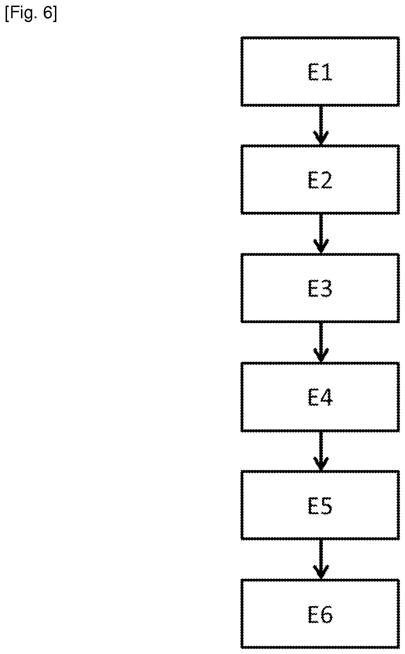

Comme illustré sur la figure 6, un procédé de fabrication d'un carter de soufflante en matériau composite avec le moule 1 comprend les étapes suivantes :
- E1 : une préforme fibreuse du carter de soufflante est enroulée autour du mandrin 2.
- E2 : le moule 1 est fermé en assemblant la pluralité de secteurs angulaires 3 de contre-moule sur le contour externe du mandrin 2. L'assemblage des secteurs angulaires 3 est réalisé en disposant un premier secteur angulaire 3a sur le mandrin 2, puis en disposant un joint plat 5 sur la portion d'étanchéité 30a du premier secteur angulaire 3a, puis en disposant le deuxième secteur angulaire 3b sur le mandrin 2 en plaçant la portion d'étanchéité 30b du deuxième secteur angulaire 3b par-dessus le joint plat 5.

- E3 : la préforme fibreuse est densifiée en injectant un matériau précurseur d'une matrice du matériau composite dans le moule 1.
- E4 : le matériau précurseur est polymérisé afin d'obtenir la matrice du matériau composite.
- E5 : les secteurs angulaires 3 sont retirés afin d'ouvrir le moule 1.
- E6 : le carter de soufflante est démoulé en étant retiré du moule 1.

Selon une variante possible, l'étape E2 est réalisée en installant d'abord tous les premiers secteurs angulaires 3a sur le mandrin 2, puis en disposant un joint plat sur les portions d'étanchéité 30a des premiers secteurs angulaires 3a, puis en installant tous les deuxièmes secteurs angulaires 3b en écrasant les joints plats 5.

## Revendications

1. Moule (1) pour la fabrication d'un carter de soufflante de turbomachine en matériau composite comprenant :
- un mandrin (2) d'axe principal (θ) autour duquel une préforme fibreuse de carter de soufflante est destinée à être enroulée ;
- une pluralité de secteurs angulaires (3, 3a, 3b) de contre-moule assemblés sur le contour externe du mandrin (2) qui sont destinés à fermer le moule (1) et à compacter la préforme fibreuse enroulée sur le mandrin (2) ;
**caractérisé en ce qu'**un joint plat (5) avec un axe principal d'élongation (β) dirigé selon l'axe principal (θ) est disposé entre chaque secteur angulaire (3, 3a, 3b), ledit joint plat (5) étant comprimé entre deux secteurs angulaires (3, 3a, 3b) adjacents, un premier secteur angulaire (3a) comprenant une portion d'étanchéité (30a) passant sous une face inférieure du joint plat (5) tandis qu'un deuxième secteur angulaire (3b) comprenant une portion d'étanchéité (30b) passant par-dessus une face supérieure du joint plat (5).

2. Moule (1) selon la revendication 1, dans lequel le joint plat (5) est incliné autour de son axe principal d'élongation (β) de sorte que la face supérieure du joint plat (5) est dirigée vers le deuxième secteur angulaire (3b).

3. Moule (1) selon l'une quelconque des revendications 1 ou 2, dans lequel le mandrin (2) comprend une bride amont (21) et une bride aval (22), un premier joint annulaire (41) étant disposé autour de la bride amont (21), et un deuxième joint annulaire (42) étant disposé autour de la bride aval (22), la face inférieure du joint plat (5) chevauchant le premier joint annulaire (41) et le deuxième joint annulaire (42).

4. Moule (1) selon la revendication 3 prise dans sa dépendance avec la revendication 2, dans lequel des protubérances (23) faisant saillie radialement vers l'extérieur sont angulairement réparties sur la bride amont (21) et la bride aval (22), les protubérances (23) de la bride amont (21) étant axialement alignées avec les protubérances (23) de la bride aval (22), les protubérances (23) comprenant deux faces planes (231) et un sommet (232) à la jonction entre les deux faces planes (231), la portion d'étanchéité (30a) du premier secteur angulaire (3a) formant une surface plane sur laquelle le joint plat (5) est disposé avec une face plane (231) des protubérances (23) de la bride amont (21) et une face plane (231) des protubérances (23) de la bride aval (22).

5. Moule (1) selon la revendication 4, dans lequel les protubérances (23) sont en forme de créneau, ou bien les protubérances (23) sont en forme de dent.

6. Moule (1) selon la revendication 4 ou la revendication 5, dans lequel la surface plane formée par la portion d'étanchéité (30a) du premier secteur (3a), la face plane (231) des protubérances (23) de la bride amont (21) et la face plane (231) des protubérances (23) de la bride aval (22) est perpendiculaire à la direction de fixation du deuxième secteur angulaire (3b) sur le mandrin (2).

7. Moule (1) selon l'une quelconque des revendications 5 ou 6, dans lequel le premier secteur angulaire (3a) est fixé directement au deuxième secteur angulaire (3b).

8. Moule (1) selon l'une quelconque des revendications 1 à 7, dans lequel les deux faces planes (231) des protubérances (23) présentent une pente différente l'une par rapport à l'autre.

9. Moule (1) selon l'une quelconque des revendications 1 à 8, dans lequel le joint plat (5) est en élastomère.

10. Procédé de fabrication d'un carter de soufflante de turbomachine en matériau composite avec le moule (1) selon l'une quelconque des revendications 1 à 9, le procédé comprenant les étapes suivantes :
- (E1) : enrouler une préforme fibreuse du carter de soufflante autour du mandrin (2) ;
- (E2) : assembler la pluralité de secteurs angulaires (3) de contre-moule sur le contour externe du mandrin (2) en disposant un premier secteur angulaire (3a) sur le contour externe du mandrin (2), le joint plat (5) étant ensuite disposé sur la portion d'étanchéité (30a) du premier secteur angulaire (3a), un deuxième secteur angulaire (3b) étant ensuite disposé sur le mandrin (2) en plaçant la portion d'étanchéité (30b) du deuxième secteur angulaire (3b) par-dessus le joint plat (5) ;
- (E3) : densifier la préforme fibreuse par injection d'un matériau précurseur d'une matrice du matériau composite dans le moule (1) ;
- (E4) : polymériser le matériau précurseur pour obtenir la matrice du matériau composite ;
- (E5) : retirer la pluralité de secteurs angulaires (3) ;
- (E6) : démouler le carter de soufflante.

## Patentansprüche

1. Form (1) zur Herstellung eines Turbinenmotorgebläsegehäuses aus einem Verbundstoffmaterial, umfassend:
- einen Dorn (2) mit Hauptachse (θ), um den herum ein Faservorformling eines Gebläsegehäuses zu wickeln ist,
- mehrere Winkelsektoren (3, 3a, 3b) einer Gegenform, die auf der Außenkontur des Dorns (2) montiert sind, die dazu dienen, die Form (1) zu schließen und den auf den Dorn (2) gewickelten Faservorformling zu verdichten,
**dadurch gekennzeichnet, dass** eine Flachdichtung (5) mit einer Haupterstreckungsachse (β), die entlang der Hauptachse (θ) gerichtet ist, zwischen jedem Winkelsektor (3, 3a, 3b) angeordnet ist, wobei die Flachdichtung (5) zwischen zwei benachbarten Winkelsektoren (3, 3a, 3b) komprimiert ist, wobei ein erster Winkelsektor (3a) einen Dichtungsabschnitt (30a) umfasst, der unter einer Unterseite der Flachdichtung (5) verläuft, während ein zweiter Winkelsektor (3b) einen Dichtungsabschnitt (30b) umfasst, der über einer Oberseite der Flachdichtung (5) verläuft.

2. Form (1) nach Anspruch 1, wobei die Flachdichtung (5) um ihre Haupterstreckungsachse (β) geneigt ist, sodass die Oberseite der Flachdichtung (5) zu dem zweiten Winkelsektor (3b) gerichtet ist.

3. Form (1) nach einem der Ansprüche 1 oder 2, wobei der Dorn (2) einen stromaufwärtigen Flansch (21) und einen stromabwärtigen Flansch (22) umfasst, wobei eine erste ringförmige Dichtung (41) um den stromaufwärtigen Flansch (21) herum angeordnet ist und eine zweite ringförmige Dichtung (42) um den stromabwärtigen Flansch (22) herum angeordnet ist, wobei die Unterseite der Flachdichtung (5) die erste ringförmige Dichtung (41) und die zweite ringförmige Dichtung (42) überlappt.

4. Form (1) nach Anspruch 3 in Abhängigkeit von Anspruch 2, wobei radial nach außen vorstehende Vorsprünge (23) winkelmäßig auf dem stromaufwärtigen Flansch (21) und dem stromabwärtigen Flansch (22) verteilt sind, wobei die Vorsprünge (23) des stromaufwärtigen Flansches (21) axial mit den Vorsprüngen (23) des stromabwärtigen Flansches (22) ausgerichtet sind, wobei die Vorsprünge (23) zwei ebene Flächen (231) und einen Scheitelpunkt (232) an der Verbindungsstelle zwischen den zwei ebenen Flächen (231) umfassen, wobei der Dichtungsabschnitt (30a) des ersten Winkelsektors (3a) mit einer ebenen Fläche (231) der Vorsprünge (23) des stromaufwärtigen Flansches (21) und einer ebenen Fläche (231) der Vorsprünge (23) des stromabwärtigen Flansches (22) eine ebene Oberfläche bildet, auf der die Flachdichtung (5) angeordnet ist.

5. Form (1) nach Anspruch 4, wobei die Vorsprünge (23) die Form eines Schlitzes aufweisen oder die Vorsprünge (23) die Form eines Zahns aufweisen.

6. Form (1) nach Anspruch 4 oder Anspruch 5, wobei die ebene Oberfläche, die durch den Dichtungsabschnitt (30a) des ersten Sektors (3a), die ebene Fläche (231) der Vorsprünge (23) des stromaufwärtigen Flansches (21) und die ebene Fläche (231) der Vorsprünge (23) des stromabwärtigen Flansches (22) gebildet ist, senkrecht zu der Befestigungsrichtung des zweiten Winkelsektors (3b) auf dem Dorn (2) ist.

7. Form (1) nach einem der Ansprüche 5 oder 6, wobei der erste Winkelsektor (3a) direkt an dem zweiten Winkelsektor (3b) befestigt ist.

8. Form (1) nach einem der Ansprüche 1 bis 7, wobei die zwei ebenen Flächen (231) der Vorsprünge (23) eine unterschiedliche Neigung in Bezug zueinander aufweisen.

9. Form (1) nach einem der Ansprüche 1 bis 8, wobei die Flachdichtung (5) aus Elastomer besteht.

10. Verfahren zur Herstellung eines Turbinenmotorgebläsegehäuses aus einem Verbundstoffmaterial mit der Form (1) nach einem der Ansprüche 1 bis 9, wobei das Verfahren die folgenden Schritte umfasst:
- (E1): Wickeln eines Faservorformlings des Gebläsegehäuses um den Dorn (2) herum,
- (E2): Montieren der mehreren Winkelsektoren (3) der Gegenform auf der Außenkontur des Dorns (2), indem ein erster Winkelsektor (3a) auf der Außenkontur des Dorns (2) angeordnet wird, wobei die Flachdichtung (5) dann auf dem Dichtungsabschnitt (30a) des ersten Winkelsektors (3a) angeordnet wird, wobei ein zweiter Winkelsektor (3b) dann auf dem Dorn (2) angeordnet wird, indem der Dichtungsabschnitt (30b) des zweiten Winkelsektors (3b) über der Flachdichtung (5) platziert wird,
- (E3): Verdichten des Faservorformlings durch Einspritzen eines Vorläufermaterials einer Matrix des Verbundstoffmaterials in die Form (1),
- (E4): Polymerisieren des Vorläufermaterials, um die Matrix des Verbundstoffmaterials zu erhalten,
- (E5): Entfernen der mehreren Winkelsektoren (3),
- (E6): Entnehmen des Gebläsegehäuses aus der Form.

## Claims

1. A mold (1) for manufacturing a turbomachine fan casing made of composite material, comprising:
- a main axis (θ) mandrel (2) around which a fibrous preform of a fan casing is intended to be wound;
- a plurality of counter-mold angular sectors (3, 3a, 3b) assembled on the outer contour of the mandrel (2) which are intended to close the mold (1) and to compact the fibrous preform wound on the mandrel (2);
**characterized in that** a flat seal (5) with a main elongation axis (β) directed along the main axis (θ) is arranged between each angular sector (3, 3a, 3b), said flat seal (5) being compressed between two adjacent angular sectors (3, 3a, 3b), a first angular sector (3a) comprising a sealing portion (30a) passing below a lower face of the flat seal (5) while a second angular sector (3b) comprising a sealing portion (30b) passing above an upper face of the flat seal (5).

2. The mold (1) according to claim 1, wherein the flat seal (5) is inclined around its main elongation axis (β) so that the upper face of the flat seal (5) is directed toward the second angular sector (3b).

3. The mold (1) according to any one of claims 1 or 2, wherein the mandrel (2) comprises an upstream flange (21) and a downstream flange (22), a first annular seal (41) being arranged around the upstream flange (21), and a second annular seal (42) being arranged around the downstream flange (22), the lower face of the flat seal (5) overlapping the first annular seal (41) and the second annular seal (42).

4. The mold (1) according to claim 3 taken with its dependence with claim 2, wherein protuberances (23) protruding radially outward are angularly distributed over the upstream flange (21) and the downstream flange (22), the protuberances (23) of the upstream flange (21) being axially aligned with the protuberances (23) of the downstream flange (22), the protuberances (23) comprising two flat faces (231) and a peak (232) at the junction between the two flat faces (231), the sealing portion (30a) of the first angular sector (3a) forming a flat surface on which the flat seal (5) is arranged with a flat face (231) of the protuberances (23) of the upstream flange (21) and a flat face (231) of the protuberances (23) of the downstream flange (22).

5. The mold (1) according to claim 4, wherein the protuberances (23) are shaped like slots, or the protuberances (23) are shaped like teeth.

6. The mold (1) according to claim 4 or claim 5, wherein the flat surface formed by the sealing portion (30a) of the first sector (3a), the flat face (231) of the protuberances (23) of the upstream flange (21) and the flat face (231) of the protuberances (23) of the downstream flange (22) is perpendicular to the direction of attachment of the second angular sector (3b) to the mandrel (2).

7. The mold (1) according to any one of claims 5 or 6, wherein the first angular sector (3a) is attached directly to the second angular sector (3b).

8. The mold (1) according to any one of claims 1 to 7, wherein the two flat faces (231) of the protuberances (23) have different slopes from one another.

9. The mold (1) according to any one of claims 1 to 8, wherein the flat seal (5) is made of an elastomer.

10. A method for manufacturing a turbomachine fan casing made of composite material with the mold (1) according to any one of claims 1 to 9, the method comprising the following steps:
- (E1): winding a fibrous preform of the fan casing around the mandrel (2);
- (E2): assembling the plurality of counter-mold angular sectors (3) on the outer contour of the mandrel (2) by arranging a first angular sector (3a) on the outer contour of the mandrel (2), the flat seal (5) then being arranged on the sealing portion (30a) of the first angular sector (3a), a second angular sector (3b) then being arranged on the mandrel (2) by placing the sealing portion (30b) of the second angular sector (3b) over the flat seal (5) ;
- (E3): densifying the fibrous preform by injecting a precursor material of a matrix of the composite material into the mold (1);
- (E4): polymerizing the precursor material to obtain the matrix of the composite material;
- (E5): removing the plurality of angular sectors (3);
- (E6): de-molding the fan casing.
